(19) Europäisches Patentamt
European Patent Office
Office européen des brevets

(11) **EP 3 242 263 A1**

(12) **EUROPEAN PATENT APPLICATION**
published in accordance with Art. 153(4) EPC

(43) Date of publication:
08.11.2017 Bulletin 2017/45

(51) Int Cl.:
*G06Q 30/00* (2012.01)

(21) Application number: 15875051.3

(86) International application number:
PCT/CN2015/096383

(22) Date of filing: 04.12.2015

(87) International publication number:
WO 2016/107373 (07.07.2016 Gazette 2016/27)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 29.12.2014 CN 201410830454

(71) Applicant: China Unionpay Co., Ltd
Shanghai 200135 (CN)

(72) Inventors:
• YANG, Hongchao
  Shanghai 200135 (CN)
• ZHENG, Jianbin
  Shanghai 200135 (CN)
• WANG, Jun
  Shanghai 200135 (CN)

(74) Representative: Schneider, Sascha et al
Becker & Müller
Patentanwälte
Turmstraße 22
40878 Ratingen (DE)

(54) **MARKING OF BUSINESS DISTRICT INFORMATION OF A MERCHANT**

(57) The present invention relates to specifying commercial district information of merchants, and it pertains to the technical field of data processing. The method for specifying commercial district information of merchants according to the present invention includes the steps of: mining and calculating association rules of consumption and transaction data of consumers so as to obtain information of association between merchants; calculating rates of subordination of merchants whose commercial district information has not been specified to several commercial districts based on the association information and specified commercial district information of at least some of the merchants; and specifying the commercial district information for each of said merchants based on their rates of subordination. The present invention can realize automatic specification of commercial district information of merchants, and the specification of commercial district information is accurate and efficient.

Fig.1

EP 3 242 263 A1

**Description**

FIELD OF THE INVENTION

The present invention pertains to the technical field of data processing, and it relates to specifying commercial district information of merchants based on processing of consumption and transaction data, in particular to mining and calculating association rules of consumption and transaction data so as to obtain information of association between merchants and to specify commercial district information of merchants based on said information of association.

BACKGROUND

Commercial districts are usually divided in cities according to scopes of commercial areas, and there are various levels of commercial districts, such as core commercial district, subordinate district and marginal district. The location information of a merchant is usually expressed in the form of commercial district information, for example, a merchant is usually considered as belonging to a certain commercial district so as to specify the commercial district information of said merchant.

Commercial district information of merchants is an important basis for making analyses about merchants and providing services for merchants, and it has become more and more important in today's commercial society. However, the fact is that in most data sets relating to merchants, the commercial district information of many merchants are incomplete and even erroneous, thus specifying said missing commercial district information becomes necessary.

At present, merchant data holders usually create merchant information by manual entering. The most distinct defect of such manually entering the commercial district information of merchants is the huge amount of work, which consumes lots of manpower and time; a second defect is that the standard of entering the commercial district information is not controllable, because different persons might use different standards in entering the commercial district information, which makes it difficult for subsequent data cleaning and analysis; a third defect is that the quality of entering of the merchant location information is not controllable, because under the background of manual entering, many merchants may have provided wrong commercial district information, and errors or omissions in the commercial district information of merchants might occur owing to faults or subjective errors of the enterers.

In view of these, a solution is needed for specifying commercial district information of merchants automatically, effectively and accurately, or for specifying missing commercial district information of merchants or for correcting wrong commercial district information of merchants.

SUMMARY OF THE INVENTION

One of the objects of the present invention is to realize automatic specification of commercial district information of merchants.

Another object of the present invention is to increase accuracy of specification of commercial district information of merchants.

Still another object of the present invention is to increase efficiency of specification of commercial district information of merchants.

In order to achieve the above-mentioned or other objects, the present invention provides the following technical solutions.

According to one aspect of the present invention, a method for specifying commercial district information of merchants is provided, which includes the steps of mining and calculating association rules of consumption and transaction data of consumers so as to obtain information of association between merchants;
calculating rates of subordination of merchants whose commercial district information has not been specified to several commercial districts based on the association information and specified commercial district information of at least some of the merchants; and
specifying the commercial district information for each of said merchants based on their rates of subordination.

A method for specifying commercial district information of merchants according to an embodiment of the present invention, wherein said step of obtaining the association information includes:

merging consumption and transaction data belonging to the same consumer, and listing all merchants involved in the merged consumption and transaction data to form data of merchant groups corresponding to said consumer;
using each of the data of merchant group as an item set and mining and calculating association rules for all item sets to obtain 1-frequent item sets and 2-frequent item sets among the merchants as well as the frequency ($f$) of appearance of each of said 1-frequent item sets and 2-frequent item sets; and
constructing a network of association among merchants involved based at least on said 2-frequent item set, and storing information of association between a first merchant (A) and a second merchant (B) corresponding to an "edge" in the network of association and represented by an edge set array.

Alternatively, the edge set array corresponding to the first merchant (A) and the second merchant (B) is:

<first merchant (A), second merchant (B), association strength $w_{AB}$> and/or
<second merchant (B), first merchant (A), association strength $w_{AB}$>
wherein, the association strength $w_{AB}$ is calculated by formula (1):

$$w_{AB} = \frac{f_{AB} \times N}{f_A \times f_B} \qquad (1)$$

wherein, $f_{AB}$ is a frequency of appearance of the 2-frequent item set corresponding to the first merchant A and the second merchant B, $f_A$ and $f_B$ are respectively frequencies of appearance of the 1-frequent item set corresponding to the first merchant A and the second merchant B, N is a total of all data of merchant groups.

Alternatively, the mining and calculation of the association rules are carried out on the basis of the Apriori or FP-Growth algorithm.

A method for specifying commercial district information of merchants according to another embodiment of the present invention, wherein said step of calculating the rates of subordination uses an independent cascade model for calculation.

In the method of any one of the above-described embodiments, the step of calculating the rates of subordination includes:

suppose that the first merchant (A) is a merchant whose commercial district information has been specified, and that said first merchant has a rate of subordination of $A_1$ relative to the specified commercial district therefor, calculating a rate of subordination $B_1$ of the second merchant (B) to said commercial district, wherein $B_1$ is calculated by formula (2):

$$B_1 = \min (p \times A_1 \times w_{AB}, 1) \qquad (2)$$

wherein, $p$ is a subordinate propagation probability of the commercial district; $A_1$ is a rate of subordination of the first merchant to the specified commercial district therefor; $w_{AB}$ is the association strength between the first merchant (A) and the second merchant (B).

In the method of any one of the above-described embodiments, at least some of the merchants whose commercial district information has been specified are defined as seed nodes in the association network.

Preferably, a core and well-known merchant in each commercial district is selected as the seed node of said commercial district.

A method for specifying commercial district information of merchants according to still another embodiment of the present invention, wherein the step of specifying the commercial district information based on the rate of subordination of each of the merchants includes:

selecting a largest rate of subordination among a plurality of rates of subordination corresponding to each of the merchants whose commercial district information has not been specified;

determining whether said largest rate of subordination is greater than or equal to a predetermined threshold;

when said largest rate of subordination is greater than or equal to the predetermined threshold, specifying the commercial district corresponding to said largest rate of subordination as the commercial district information of said merchant;

when said largest rate of subordination is smaller than the predetermined threshold, considering that said merchant does not have an obvious subordination to any commercial district and giving up specification of commercial information for said merchant.

According to yet another aspect of the present invention, a device for specifying commercial district information of merchants is provided, which comprises:

a first component for mining and calculating association rules of consumption and transaction data of consumers so as to obtain information of association between merchants;

a second component for calculating rates of subordination of merchants whose commercial district information has not been specified to several commercial districts based on the association information and specified commercial district information of at least some of the merchants; and

a third component for specifying the commercial district information for each of said merchants based on their rates of subordination.

A device for specifying commercial district information of merchants according to another embodiment of the present invention, wherein the first component comprises:

a first sub-component for merging consumption and transaction data belonging to the same consumer, and listing all merchants involved in the merged consumption and transaction data to form data of merchant groups corresponding to said consumer;

a second sub-component for using each of the data of merchant groups as an item set and mining and calculating association rules for all item sets to obtain 1-frequent item sets and 2-frequent item sets among the merchants as well as the frequency ($f$) of appearance of each of said 1-frequent item sets and 2-frequent item sets; and

a third sub-component for constructing a network of association among merchants involved the 2-frequent item set based at least on said 2-frequent item sets, and storing information of association between a first merchant (A) and a second merchant (B) corresponding to an "edge" in the association network and represented by an edge set array.

Alternatively, in the third sub-component, the edge set array corresponding to the first merchant (A) and the second merchant (B) is:

<first merchant (A), second merchant (B), association strength $w_{AB}$> and/or
<second merchant (B), first merchant (A), association strength $w_{AB}$>
wherein, the association strength $w_{AB}$ is calculated by formula (1):

$$w_{AB} = \frac{f_{AB} \times N}{f_A \times f_B} \qquad (1)$$

wherein, $f_{AB}$ is a frequency of appearance of the 2-frequent item set corresponding to the first merchant A and the second merchant B, $f_A$ and $f_B$ are respectively frequencies of appearance of the 1-frequent item set corresponding to the first merchant A and the second merchant B, N is a total of all data of merchant groups.

A device for specifying commercial district information of merchants according to still another embodiment of the present invention, wherein the second component is configured to use an independent cascade model for calculation.

In the device of any one of the above-described embodiments, the second component is configured to perform the following:

suppose that the first merchant (A) is a merchant whose commercial district information has been specified, and that said first merchant has a rate of subordination of $A_1$ relative to the specified commercial district therefor, calculating a rate of subordination $B_1$ of the second merchant (B) to said commercial district, wherein $B_1$ is calculated by formula (2):

$$B_I = \min (p \times A_I \times w_{AB}, 1) \qquad (2)$$

wherein, p is a subordinate propagation probability of the commercial district; $A_1$ is a rate of subordination of the first merchant to specified commercial district therefor; $w_{AB}$ is the association strength between the first merchant (A) and the second merchant (B).

A device for specifying commercial district information of merchants according to yet another embodiment of the present invention, wherein the third component is configured to:

select a largest rate of subordination among a plurality of rates of subordination corresponding to each of the merchants whose commercial district information has not been specified;
determine whether said largest rate of subordination is greater than or equal to a predetermined threshold;
when said largest rate of subordination is greater than or equal to the predetermined threshold, specify the commercial district corresponding to said largest rate of subordination as the commercial district information of said merchant;
when said largest rate of subordination is smaller than the predetermined threshold, consider that said merchant does not have an obvious subordination to any commercial district and give up specification of commercial information for said merchant.

According to still another aspect of the present invention, a computer program product comprising a computer program code device is provided, which is used for carrying out the above-mentioned risk control method when said computer program code device is operated by an electronic apparatus having a computer capability.

These and other advantages and characteristics of the present invention will become readily apparent after a review of the following description with reference to the drawings.

BRIEF DESCRIPTION OF THE DRAWINGS

The above and other objects and advantages of the present invention will become clearer and more complete from the following detailed descriptions in conjunction with the accompanying drawings, wherein like reference numerals designate like elements.

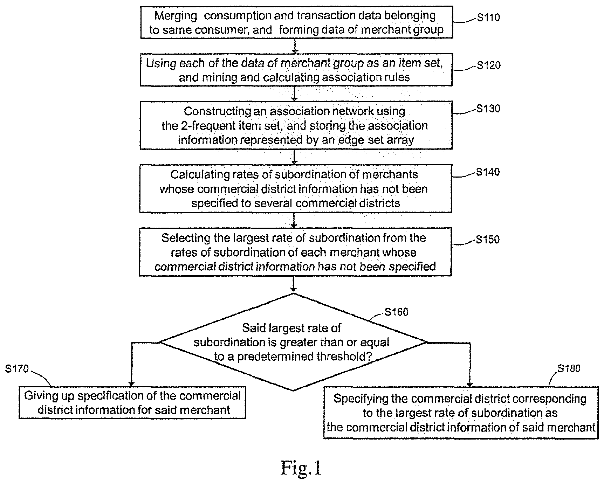

Fig. 1 is a flow chart of a method for specifying commercial district information of merchants according to one embodiment of the present invention.

DETAILED DESCRIPTION OF THE INVENTION

Some of the many possible embodiments of the present invention are described below, which intend only to provide a basic understanding of the present invention rather than identifying critical or decisive factors of the present invention or limiting the claimed protection scope. It shall be readily appreciated that on the basis of the technical solutions of the present invention, those skilled in the art can propose other replaceable embodiments without changing the basic spirit of the present invention. Hence, the following specific embodiments and figures are merely examples of the technical solutions of the present invention, but they shall not be construed as the entirety of the present invention or as limitations or restrictions to the technical solutions of the present invention.

In the description below, the definition of a "commercial district" in cities is known, for example, the scopes of areas corresponding to the commercial districts are known, and the solution for specifying commercial district information as disclosed in the text below aims at learning the commercial district to which a certain merchant belongs and specifying or correcting it, while the type, location, etc. of the merchant are not restrictive.

In this document, an item set including k items is called a k-item set, wherein k is an integer greater than or equal to 1, for example, a 1-item set, a 2-item set; each item included in the k-item set is called a k-item; by calculating a degree of support of the k-item set to see if said degree of support is greater than or equal to a corresponding threshold of the degree of support, it can be determined whether said k-item set is a k-frequent-item set. Wherein, the threshold of the degree of support can be set according to the specific situation, when k has different values, the corresponding thresholds of the degree of support may be either the same or different.

Fig. 1 is a flow chart of a method for specifying commercial district information of merchants according to one embodiment of the present invention. The method for specifying commercial district information of merchants according to the embodiment of the present invention will be described in detail below with reference to Fig. 1.

First, in step S110, consumption and transaction data of the same consumer are merged together to form data of a group of merchants. In an embodiment of the present invention, association between merchants is established on the basis of the record of consumption and transaction (i.e. consumption and transaction data). The contents of the consumption and transaction data usually at least include information of the consumers and information of the merchants. Consumers refer to consumer individuals, and identifications or representations of the consumers and merchants in the consumption and transaction data are not restrictive, for example, identifications of consumers can be bank card numbers, payment account number, physical person identifications, etc., and identifications of merchants can be names of merchants, serial numbers of merchants, etc.

During data processing in said step, based on the larger amount of consumption and transaction data, consumption and transaction data belonging to the same consumer are merged together so as to obtain a list of all the merchants involved in the merged consumption and transaction data, then said merchants form data of a group of merchants, which are the data of a group of merchants corresponding to the consumer.

Further, in step S120, association rules are mined and calculated by using each of said data of a group of merchants as an item set. Specifically, in said step, data of a group of merchants corresponding to each consumer can be obtained from the previous step, and each data of a group of merchants is defined as an item set used in mining of the association rules, and the number of items included in the item set reflects the number of merchants, which is not restrictive, for example, k-item set means that k merchants are included. In this embodiment, an algorithm of mining of the association rules can be used to mine and calculate the association rules of the multiple item sets, thereby obtaining the frequency of appearance of the 1-frequent item set, the 2-frequent item set as well as both the 1-frequent item set and the 2-frequent item in the merchants. Specifically, mining and calculation of the association rules can, but are not limited to, be performed on the basis of the Apriori or FP-Growth algorithm, and the algorithm used for mining and calculation of the association rules may update with the development of the mining and calculation of the association rules.

Wherein, when determining whether the 1-item set and the 2-item set are 1-frequent item set and 2-frequent item set, degrees of support thereof can be calculated to see if they are greater than or equal to a corresponding threshold of the degree of support. Details thereof will not be elaborated any more herein.

Further, in step S130, an association network is constructed using the 2-frequent item set and the association information represented by an edge set array is stored. In this step, the 2-frequent item set mined in step S120 will be stored, the 2-frequent item in the 2-frequent item set correspond to two merchants, and there is an association between the two merchants correspond to the 2-frequent item set, thus by using the merchants as "nodes", using the association between the two merchants corresponding to each 2-frequent item set as "edges", a net-like association structure, i.e. an association network, is constructed for all merchants involved in all 2-frequent item sets; said association network can be represented by means of edge set arrays and can store all edge set arrays. The edge set array represents the information of association between merchant A at the starting point and merchant B at the end point corresponding to an "edge" of the association network, as an example, the edge set array between merchant A and merchant B can be represented by:

<merchant A, merchant B, association strength $w_{AB}$> and/or

< merchant B, merchant A, association strength $w_{AB}$>

wherein, merchant A is a source node/target node, merchant B is a target node/source node, and the association strength $w_{AB}$ corresponds to an edge weight of the edge set array.

Specifically, the association between merchants is undirected, namely, the edge corresponding to each 2-frequent item set is undirected, so each 2-frequent item set can store two edges, namely, it can store two of the above-mentioned edge set arrays, wherein the association strength $w_{AB}$ is calculated by formula (1):

$$w_{AB} = \frac{f_{AB} \times N}{f_A \times f_B} \quad (1)$$

wherein, $f_{AB}$ is a frequency of appearance of the 2-frequent item set corresponding to merchant A and merchant B, $f_A$ is the frequency of appearance of the 1-frequent item set corresponding to merchant A and $f_B$ is the frequency of appearance of the 1-frequent item set corresponding to merchant B, N is a total of the data of merchant groups obtained in step S110.

The above steps S110 to S130 substantially realizes establishment of association between merchants, and specification of the commercial district information below is based on the association information obtained in the above.

Further, in step S140, rates of subordination of merchants whose commercial district information has not been specified to several commercial districts are calculated.

In the present invention, a prerequisite for specifying the commercial district information for merchants whose commercial district information has not been specified is that the commercial district information of at least some of the merchants has been specified (i.e. known and acknowledged to be correct). Generally, the commercial district information of the major merchants (e.g. core and well-known merchants) covered in a certain commercial district should be known and confirmed, so these well-known merchants can be used as specified merchants of said commercial district; the specified merchants can be defined as seed nodes of the commercial district to which they belong, for example, when said well-known merchants appear in the above-mentioned association network, they can be defined as seed nodes of the commercial district to which they belong. It shall be noted that there is no limitation for the number of seed nodes of each commercial district, but the larger the number of the seed nodes of each commercial district is, the more accurate the result of specification in the present invention would be. Meanwhile, the seed nodes should be the most representative merchants in the commercial district so as to increase accuracy of the result of specification in the present invention. Besides, preferably, there should not be a large difference between the numbers of seed nodes of different commercial districts, for example, the difference between the numbers of seed nodes of different commercial districts should be no more than 20, and range of value of the difference between the numbers of seed nodes of different commercial districts can be adjusted according to the actual data situation in the model training process for specifying commercial district information of merchants.

In this embodiment, starting from said seed nodes, the rate of subordination of other merchants to several commercial districts can be calculated in the association network between merchants.

To facilitate description, it is assumed that all merchants belong to two commercial districts (as for other numbers of commercial districts, analogies can be made according to the disclosure of the embodiment in the present invention), then it is initially considered that the rate of subordination of all seed nodes to the commercial districts to which they belong is 1, and calculation of the rate of subordination of other merchants to different commercial districts will be described below. In the embodiment of the present invention, the calculation of the rate of subordination is realized by means of an Independent Cascade Model, and the specific process is as follows:

First, it shall be noted that for a certain commercial district, merchants are divided into two types, i.e. "merchants whose rates of subordination have been specified" and "merchants whose rates of subordination have not been specified". Initially, only the seed nodes have their rates of subordination specified, and for each merchant, as long as its rate of subordination to a certain commercial district has been specified, then its rate of subordination to said commercial district can no longer be changed.

Next, for each merchant whose rate of subordination to a corresponding commercial district has been specified, rates of subordination are calculated for merchants which are associated with said merchant and whose rates of subordination have not been specified yet. For example, suppose that for merchant A, its rate of subordination to a commercial district 1 has been specified as $A_1$, or its rates of subordination to commercial district 1 and commercial district 2 have been specified as $A_1$ and $A_2$ ($A_1 > A_2$), while merchant B is associated with merchant A, namely, merchant B and merchant A are two end points of an edge of the association network, and the rate of subordination to commercial district 1 has not been specified for merchant B, then the rate of subordination of merchant B to commercial district 1 is calculated by the following formula (2):

$$B_1 = \min (p \times A_1 \times w_{AB},\ 1) \quad (2)$$

wherein, p is a subordinate propagation probability of the commercial district, said probability can be a predefined fixed value, such as 0.1, or it can be a value varying according to a certain rule, for example, each time a rate of subordination of a merchant to said commercial district is specified, the value of $p$ decrements; $A_1$ is a rate of subordination of the already specified merchant A to commercial district 1, and it is known; $w_{AB}$ is the association strength between merchant A and merchant B, which is calculated by the above-mentioned formula (1) and is already saved.

In the above formula (2), the rate of subordination $B_1$ of merchant B to commercial district 1 is the smallest one of ($p \times A_1 \times w_{AB}$) and 1, wherein 1 reflects the maximum probability 1, i.e. the maximum possible value for the rate of subordination.

Further, the above step is repeated until the rates of subordination of said merchant to more other commercial districts are calculated and specified. For example, the rate of subordination $B_2$ of merchant B to commercial district 2 is calculated.

It shall be noted that although the above embodiment only provides an example for calculating the rates of subordination of an unspecified merchant to several commercial districts by means of the Independent Cascade Model, those skilled in the art will appreciate that, on the basis of the above disclosure and teaching, other types of propagation models (e.g. a linear threshold model, etc.) can be used for calculating the rates of subordination of unspecified merchants to commercial districts corresponding to specified merchants.

Further, in step S150, the largest rate of subordination is selected from the rates of subordination of each merchant whose commercial district information has not been specified. Take merchant B as an example, the largest value is selected from the rates of subordination $B_1$ and $B_2$, and the commercial district corresponding to said largest value is the candidate commercial district to which merchant B belongs.

Further, in step S160, it is determined whether said largest rate of subordination is greater than or equal to a predetermined threshold.

If the rate of subordination of a merchant to a candidate commercial district reaches a preset threshold $\sigma$, then it will be determined that said candidate commercial district is the commercial district to which said merchant belongs, and the commercial district corresponding to the largest rate of subordination is specified as the commercial district information of said merchant, namely, step S180 is carried out; if said largest rate of subordination is smaller than the preset threshold $\sigma$, it will be deemed that said merchant does not have an obvious subordination to any commercial district and specification of the commercial district information for said merchant is given up, namely, step S170 is carried out.

It is important to note that if multiple largest rates of subordination having the same value appear in step S150, and if said multiple largest rates of subordination are all found to be greater than or equal to the preset threshold $\sigma$ in step S160, then it means that said merchant might belong to multiple commercial districts; and if said multiple largest rates of subordination are all found to be smaller than the preset threshold $\sigma$ in step S160, then it means that said merchant does not have an obvious subordination to any commercial district.

By carrying out the above-described steps S140-S180 sequentially, specification of commercial district information for each merchant can be realized. To be clear, the merchants whose commercial district information has been specified in the above-mentioned steps can be used as merchants whose commercial district information has been specified, thus providing a basis for specification of the commercial district information of merchants associated with said merchants. By means of propagation like this, specification of commercial district information for all merchants can be realized.

It shall be appreciated that the method for specifying commercial district information of merchants as disclosed in the above embodiments can not only specify commercial district information for merchants whose commercial district information has not been specified, but it can also re-specify commercial district information for a merchant whose commercial district information is already known but erroneous, only that the merchant having erroneous commercial district information is considered as "a merchant whose commercial district information is not specified".

The embodiments of the present invention can realize automatic specification of commercial district information of merchants, thus avoiding the troubles and deficiencies of manual specification, and realizing accurate and efficient specification of commercial district information.

It should be understood that the above flow charts and/or block diagrams as well as corresponding illustrations of the flow charts and/or block diagrams can be realized by computer program instructions. Said computer program instructions can be provided to a general-purpose computer, a special-purpose computer or processors of other programmable data processing devices to form a machine, so that the instructions executed by the computer or processors of other programmable data processing devices create components for realizing functions/operations designated in one or more blocks of said flow charts and/or block diagrams.

Besides, said computer program instructions can be stored in a computer-readable memory to instruct the computer or other programmable processors to achieve functions in specific ways, so that said instructions stored in the computer-readable memory form manufactured products comprising components for realizing functions/operations designated in one or more blocks of said flow charts and/or block diagrams.

Moreover, said computer program instructions can be loaded onto a computer or other programmable data processors so that a series of operational steps can be carried out on the computer or other programmable processors, thus forming a computer-implemented process, so that said instructions executed on the computer or other programmable data processors provide steps for realizing functions or operations indicated in one or more blocks of said flow charts and/or block diagrams. It shall also be noted that in some optional implementations, the functions/operations indicated in the blocks may not occur according to the sequence shown in the flow chart. For example, two blocks shown in sequence may actually be carried out substantially at the same time or sometimes these blocks can be carried out in an inverted sequence, depending on the functions/operations involved.

The specification method described in the above embodiments makes use of a data mining method so as to specify commercial district information by means of automation, for example, missing commercial district information in a data set of merchant information is specified, and to make up for the shortage of manual entry of the merchant information, thus it is efficient and accurate and brings convenience for merchant-based data analysis and service offering.

Moreover, in the step of specifying commercial district information of merchants by means of an information propagation model-Independent Cascade Model, in the complex network, subordination to a commercial district is used as the basic information, and said information is propagated in the association network of merchants, so that merchants that do not subordinate to any commercial district also obtain corresponding subordination to a commercial district. The Independent Cascade Model, as one of the propagation models, has a reliable mathematical foundation, which can guarantee accuracy of the finally obtained commercial district information.

The above examples mainly describe the method for specifying commercial district information of merchants according to the present invention. Although only some of the embodiments of the present invention are described, those skilled in the art shall understand that the present invention can be implemented in many other forms without departing from the spirit and scope of the present invention. Therefore, the described examples and embodiments are schematic rather than restrictive, and the present invention can be subject to various modifications and substitutions without departing from the spirit and scope of the present invention as defined in the appended claims.

**Claims**

1. A method for specifying commercial district information of merchants, wherein said method includes the steps of:

    mining and calculating association rules of consumption and transaction data of consumers so as to obtain information of association between merchants;
    calculating rates of subordination of merchants whose commercial district information has not been specified to several commercial districts based on the association information and specified commercial district information of at least some of the merchants; and
    specifying the commercial district information for each of said merchants based on their rates of subordination.

2. The method according to claim 1, wherein said step of obtaining the association information includes:

    merging consumption and transaction data belonging to the same consumer, and listing all merchants involved in the merged consumption and transaction data to form data of merchant group corresponding to said consumer;
    using each of the data of merchant group as an item set and mining and calculating association rules for all item sets to obtain 1-frequent item sets and 2-frequent item sets among the merchants as well as the frequency ($f$) of appearance of each of said 1-frequent item sets and 2-frequent item sets; and
    constructing a network of association among merchants involved the 2-frequent item set based at least on said 2-frequent item set, and storing the association information between a first merchant (A) and a second merchant (B) corresponding to an "edge" in the association network and represented by an edge set array.

3. The method according to claim 2, wherein the edge set array corresponding to the first merchant (A) and the second merchant (B) is:

    <first merchant (A), second merchant (B), association strength $w_{AB}$> and/or
    <second merchant (B), first merchant (A), association strength $w_{AB}$>
    wherein, the association strength $w_{AB}$ is calculated by formula (1):

$$w_{AB} = \frac{f_{AB} \times N}{f_A \times f_B} \qquad (1)$$

    wherein, $f_{AB}$ is a frequency of appearance of the 2-frequent item set corresponding to the first merchant A and the second merchant B, $f_A$ and $f_B$ are respectively frequencies of appearance of the 1-frequent item set corresponding to the first merchant A and the second merchant B, N is a total of all data of merchant groups.

4. The method according to claim 1, wherein the mining and calculation of the association rules are carried out on the basis of the Apriori or FP-Growth algorithm.

5. The method according to claim 1, wherein said step of calculating the rates of subordination uses an independent cascade model for calculation.

6. The method according to claim 3, wherein the step of calculating the rates of subordination includes:

suppose that the first merchant (A) is a merchant whose commercial district information has been specified, and that said first merchant has a rate of subordination of $A_1$ relative to the specified commercial district therefor, calculating a rate of subordination $B_1$ of the second merchant (B) to said commercial district, wherein $B_1$ is calculated by formula (2):

$$B_1 = \min(p \times A_1 \times w_{AB}, 1) \quad (2)$$

wherein, $p$ is a subordinate propagation probability of the commercial district; $A_1$ is a rate of subordination of the first merchant to the specified commercial district therefor; $w_{AB}$ is the association strength between the first merchant (A) and the second merchant (B).

7. The method according to claim 3, wherein at least some of the merchants whose commercial district information has been specified are defined as seed nodes in the association network.

8. The method according to claim 7, wherein a core and well-known merchant in each commercial district is selected as the seed node of said commercial district.

9. The method according to claim 1, wherein the step of specifying the commercial district information based on the rate of subordination of each of the merchants includes:

   selecting a largest rate of subordination among a plurality of rates of subordination corresponding to each of the merchants whose commercial district information has not been specified;
   determining whether said largest rate of subordination is greater than or equal to a predetermined threshold;
   when said largest rate of subordination is greater than or equal to the predetermined threshold, specifying the commercial district corresponding to said largest rate of subordination as the commercial district information of said merchant;
   when said largest rate of subordination is smaller than the predetermined threshold, considering that said merchant does not have an obvious subordination to any commercial district and giving up specification of commercial information for said merchant.

10. A device for specifying commercial district information of merchants, which comprises:

   a first component for mining and calculating association rules of consumption and transaction data of consumers so as to obtain information of association between merchants;
   a second component for calculating rates of subordination of merchants whose commercial district information has not been specified to several commercial districts based on the association information and specified commercial district information of at least some of the merchants; and
   a third component for specifying the commercial district information for each of said merchants based on their rates of subordination.

11. The device according to claim 10, wherein the first component comprises:

   a first sub-component for merging consumption and transaction data belonging to the same consumer, and listing all merchants involved in the merged consumption and transaction data to form data of merchant groups corresponding to said consumer;
   a second sub-component for using each of the data of merchant group as an item set and mining and calculating association rules for all item sets to obtain 1-frequent item sets and 2-frequent item sets among the merchants as well as the frequency ($f$) of appearance of each of said 1-frequent item sets and 2-frequent item sets; and
   a third sub-component for constructing a network of association among merchants involved the 2-frequent item set based at least on said 2-frequent item sets, and storing information of association between a first merchant (A) and a second merchant (B) corresponding to an "edge" in the association network and represented by an edge set array.

12. The device according to claim 11, wherein in the third sub-component, the edge set array corresponding to the first merchant (A) and the second merchant (B) is:

   <first merchant (A), second merchant (B), association strength $w_{AB}$> and/or
   <second merchant (B), first merchant (A), association strength $w_{AB}$>
   wherein, the association strength $w_{AB}$ is calculated by formula (1):

$$w_{AB} = \frac{f_{AB} \times N}{f_A \times f_B} \quad (1)$$

wherein, $f_{AB}$ is a frequency of appearance of the 2-frequent item set corresponding to the first merchant A and the second merchant B, $f_A$ and $f_B$ are respectively frequencies of appearance of the 1-frequent item set corresponding to the first merchant A and the second merchant B, N is a total of all data of merchant groups.

13. The device according to claim 10, wherein the second component is configured to use an independent cascade model for calculation.

14. The device according to claim 12, wherein the second component is configured to perform the following:

suppose that the first merchant (A) is a merchant whose commercial district information has been specified, and that said first merchant has a rate of subordination of $A_1$ relative to the specified commercial district therefor, calculating a rate of subordination $B_1$ of the second merchant (B) to said commercial district, wherein $B_1$ is calculated by formula (2):

$$B_1 = \min \left( p \times A_1 \times w_{AB},\ 1 \right) \qquad (2)$$

wherein, p is a subordinate propagation probability of the commercial district; $A_1$ is a rate of subordination of the first merchant to the specified commercial district therefor; $w_{AB}$ is the association strength between the first merchant (A) and the second merchant (B).

15. The device according to claim 10, wherein the third component is configured to:

select a largest rate of subordination among a plurality of rates of subordination corresponding to each of the merchants whose commercial district information has not been specified;
determine whether said largest rate of subordination is greater than or equal to a predetermined threshold;
when said largest rate of subordination is greater than or equal to the predetermined threshold, specify the commercial district corresponding to said largest rate of subordination as the commercial district information of said merchant;
when said largest rate of subordination is smaller than the predetermined threshold, consider that said merchant does not have an obvious subordination to any commercial district and give up specification of commercial information for said merchant.

16. A computer program product comprising a computer program code device, which is used for carrying out the method according to any one of claims 1-9 when said computer program code device is operated by an electronic apparatus having a computer capability.

Merging consumption and transaction data belonging to same consumer, and forming data of merchant group — S110

Using each of the data of merchant group as an item set, and mining and calculating association rules — S120

Constructing an association network using the 2-frequent item set, and storing the association information represented by an edge set array — S130

Calculating rates of subordination of merchants whose commercial district information has not been specified to several commercial districts — S140

Selecting the largest rate of subordination from the rates of subordination of each merchant whose commercial district information has not been specified — S150

Said largest rate of subordination is greater than or equal to a predetermined threshold? — S160

S170 — Giving up specification of the commercial district information for said merchant

S180 — Specifying the commercial district corresponding to the largest rate of subordination as the commercial district information of said merchant

Fig.1

# INTERNATIONAL SEARCH REPORT

| | International application No. |
|---|---|
| | **PCT/CN2015/096383** |

**A. CLASSIFICATION OF SUBJECT MATTER**

G06Q 30/00 (2012.01) i

According to International Patent Classification (IPC) or to both national classification and IPC

**B. FIELDS SEARCHED**

Minimum documentation searched (classification system followed by classification symbols)

G06Q, G06F

Documentation searched other than minimum documentation to the extent that such documents are included in the fields searched

Electronic data base consulted during the international search (name of data base and, where practicable, search terms used)

CNKI, CNPAT, WPI, EPODOC: business area, merchant, business, area, district, commercial, user, relat+, associat+, mining, consum+

**C. DOCUMENTS CONSIDERED TO BE RELEVANT**

| Category* | Citation of document, with indication, where appropriate, of the relevant passages | Relevant to claim No. |
|---|---|---|
| X | CN 102541886 A (HAO, Jingtao et al.), 04 July 2012 (04.07.2012), description, paragraphs [0005] and [0016] | 1, 4, 5, 10, 13, 16 |
| A | CN 101393671 A (INDUSTRIAL AND COMMERCIAL BANK OF CHINA LIMITED), 25 March 2009 (25.03.2009), the whole document | 1-16 |
| A | CN 102467714 A (EVERMORE TECHNOLOGY, INC.), 23 May 2012 (23.05.2012), the whole document | 1-16 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 January 2016 (19.01.2016) | **29 February 2016 (29.02.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **ZHAO, Xiaomin** Telephone No.: (86-10) **62414041** |
|---|---|

Form PCT/ISA/210 (second sheet) (July 2009)

## INTERNATIONAL SEARCH REPORT
### Information on patent family members

International application No.

**PCT/CN2015/096383**

| Patent Documents referred in the Report | Publication Date | Patent Family | Publication Date |
|---|---|---|---|
| CN 102541886 A | 04 July 2012 | None | |
| CN 101393671 A | 25 March 2009 | None | |
| CN 102467714 A | 23 May 2012 | None | |

Form PCT/ISA/210 (patent family annex) (July 2009)